# EUROPEAN PATENT SPECIFICATION

(11) **EP 3 973 254 B1**
(45) Date of publication and mention of the grant of the patent: **16.04.2025**
(21) Application number: 19726662.0
(22) Date of filing: 23.05.2019
(51) Int. Cl.: G01F 23/26

(54) **TANK MODULE AND LIQUID PROVIDING APPARATUS WITH SUCH A TANK MODULE**
TANKMODUL UND FLÜSSIGKEITSVERSORGUNGSVORRICHTUNG MIT EINEM SOLCHEN TANKMODUL
MODULE DE RÉSERVOIR ET APPAREIL DE FOURNITURE DE LIQUIDE DOTÉ D'UN TEL MODULE DE RÉSERVOIR

(43) Date of publication of application: 30.03.2022
(73) Proprietor: ECOLAB USA INC., St. Paul, MN 55102 (US)
(72) Inventor: RUPPERT, Andreas, 83313 Siegsdorf (DE); HORN, Katharina, 83487 Marktschellenberg (DE); ALBRECHT, Rudolf, 83043 Bad Aibling (DE); CARLHOFF, Gerold, 47918 Toenisvorst (DE)
(74) Representative: Michalski Hüttermann & Partner Patentanwälte mbB
(86) International application number: PCT/EP2019/063391
(87) International publication number: WO 2020/233822

(56) References cited:
- EP-A2- 0 419 104
- WO-A1-2017/114563

## Description

### Field of the Invention

The invention relates to a tank module with a tank and an inductive conductivity sensor arranged for determining a liquid level of liquid in the tank.

The invention further relates to an apparatus arranged for providing liquid from a storage container to a liquid intake device, which apparatus comprises a tank module.

### Background of the Invention

A tank module with a tank and an inductive conductivity sensor is known from document US 2011/0001490 A1. The inductive conductivity sensor comprises at least one transmitter unit with a transmitter coil for generating an alternating field which generates an annular current in the liquid and at least one receiver unit with a receiver coil for receiving a receive signal generated via the annular current. One of the mentioned applications is fill level detection with respect to the tank.

Document EP 0 419 104 A2 discloses a method of detecting the level of molten metal existing within a mold. According to a method disclosed in this document, a plurality of sets of transmission coils and receiving coils are oppositely disposed on the outsides of the mold walls, at intervals in the vertical direction in which the level of the molten steel changes.

Dosing systems implemented as a dosing station arranged for providing liquid from a storage container, like a canister, to a dosing device of the system have previously been disclosed. Such systems generally include an apparatus arranged for providing liquid from a storage container to a liquid intake device. One example of such an apparatus and dosing system is disclosed in WO 2017/114563 A1. The corresponding apparatus for providing liquid from a storage container of this dosing system comprises: (i) an extraction probe for extracting liquid out of the storage container; (ii) a tank module comprising a tank and an inductive conductivity sensor for determining a liquid level of a liquid in the tank, wherein the tank forms a buffer reservoir which is connected to the extraction probe; (iii) a feeding line connecting the buffer reservoir to a liquid outlet of the apparatus, which liquid outlet is adapted for establishing a connection to the liquid intake device; (iv) a venting line connecting the buffer reservoir with an air outlet of the apparatus; and (v) a support for mounting the apparatus on the storage container in such way, that the extraction probe extends through a liquid outlet of the storage container into the interior of said storage container.

A simple inductive conductivity sensor can only determine whether the liquid level of the liquid in the tank is lower or higher than a defined limit value of the liquid level.

Therefore, one object underlying the present invention is to provide an improved tank module, especially an improved tank module for an apparatus arranged for providing liquid from a storage container to a liquid intake device.

### Summary of the Invention

This object is achieved by the invention as defined by the independent claim.

The dependent claims detail advantageous embodiments of the invention.

According to various aspects of the invention, the tank module comprises a tank and an inductive conductivity sensor arranged for determining a liquid level of a liquid in the tank. It is provided that the inductive conductivity sensor comprises (a) at least one transmitter unit for generating an alternating field which generates one or more annular currents in the liquid and (b) at least one receiver unit for receiving a receive signal generated via the annular current or at least one of the annular currents, wherein the interior of the tank specifies by its shape different ring-like paths for enabling a plurality of annular currents, wherein for the formation of an annular current in the respective ring-like path an individual minimum liquid level is necessary, wherein the minimum liquid levels differ for the different ring-like paths. With such a tank module a plurality of predetermined liquid levels can be determined very precisely.

According to the invention as claimed, the interior of the tank comprises a first region being the main transmitting region of the transmitter unit and a second region being the main receiving region of the receiver unit, wherein both regions are located on each of the different ring-like paths.

According to the claimed invention, the two aforementioned regions are partially separated by a dividing structure of the tank.

In this embodiment the tank preferably comprises one or more channels through the dividing structure for providing the ring-like paths, wherein each channel is at a well-defined individual height. These different heights correspond to the different liquid levels to be determined.

In accordance with another aspect of the present invention, at least one part of the dividing structure is formed as a divider plate. Preferably, at least one of the channels is realized as a break-through in said divider plate.

In accordance with yet another aspect of the present invention, the tank comprises a first main part serving as an upper part and a second main part serving as a lower part of the tank, wherein the interior spaces of said main parts are connected by two passages separated from each other, wherein at least one of the passages comprises the first and second regions. In one embodiment one of the passages forms the first region and the other passage forms the second region.

Preferably the divider plate is located in the first main part of the tank.

In accordance with another aspect of the present invention, the transmitter unit comprises a transmitter device and a transmitter coil and the receiver unit comprises a receiver device and a receiver coil.

In this case the one passage is preferably surrounded by the transmitter coil and the other passage is surrounded by the receiver coil or only one of these passages is surrounded by both of these coils.

According to various aspects of the invention, the apparatus arranged for providing liquid from a storage container to a liquid intake device comprises:
(i) an extraction probe for extracting liquid out of the storage container;
(ii) a tank module comprising a tank and a detector for detecting a liquid level of a liquid in the tank, wherein the tank acts as a buffer reservoir which is connected to the extraction probe;
(iii) a feeding line connecting the tank to a liquid outlet of the apparatus, which liquid outlet is adapted for establishing a connection to the liquid intake device;
(iv) a venting line connecting the tank with an air outlet of the apparatus; and
(v) a support for mounting the apparatus on the storage container in such way, that the extraction probe extends through a liquid outlet of the storage container into the interior of said storage container. The tank module is an aforementioned tank module, wherein the inductive conductivity sensor of said tank module acts as a detector for detecting the liquid level of a liquid in the tank/buffer reservoir.

In other words, the apparatus according to these aspects of the invention is an apparatus adapted for direct installation at/on the storage container and for a connection to a liquid intake device like a dosing device comprising a dosing pump or any other liquid pumping device. The contact-free liquid level detector for detecting the liquid level in the tank/buffer reservoir takes up only little space and ensures proper function. Since the apparatus is mounted/installed on the storage container for the utilization phase only and not permanently, said apparatus can be used much more flexible.

On the other hand, due to this non-permanent installation, the apparatus preferably comprises safety measures for preventing a leakage of liquid from the tank/buffer reservoir via the venting line and the air outlet respectively. Therefore, the venting line and/or the connection of the venting line with the tank/buffer reservoir comprise(s) a waterproof (but breathable) membrane for preventing a leakage of liquid via the venting line. This membrane preferably is a waterproof, breathable fabric membrane, e.g. a Gore-Tex^{™} membrane. The major advantages of emptying a storage container by use of this kind of apparatus is that the liquid can be provided free from air or other gases (free of blow-holes), the storage container can be emptied almost completely, an out-of-liquid detection is automatically implied and the apparatus is movable and therefore very flexible in use. All these advantages are of particular value when providing hazardous chemicals from the storage containers.

According to a preferred embodiment of the present invention, the apparatus further comprises a sensing device for determining whether the apparatus is mounted at/on the storage container via the support. Preferably, the sensing device is formed as a button type sensing device with a "connected finger".

In accordance with another aspect of the present invention, the support for mounting the apparatus on the storage container is adapted for providing a connection with a nozzle (or tubular mouthpiece) forming the liquid outlet of the storage container. Many storage containers, like e.g. canisters and so-called save packages for chemical products, do have liquid outlets formed as nozzles. These kinds of nozzles often comprise external threads and/or additional collars. Many storage containers are equipped with standard-type nozzles showing these attributes. The support for mounting the apparatus on the storage container preferably uses further standard attributes like a cap nut arranged for a form fit with the external thread of the nozzle or lever arms arranged for a form fit with the collar surrounding the nozzle.

According to another preferred embodiment of the present invention, the extraction probe comprises a hollow needle, which hollow needle preferably is surrounded by a socket-like safety component. Such kind of extraction probe with a hollow needle (with a sharpened tip) is, e.g., known from a device for dispensing liquids from a storage container provided with a liquid outlet formed as a substantially nozzle or tubular mouthpiece, which device is described in document US 2005/0103810 A1. The needle is arranged for providing a fluidic connection to a suction lance installed in the interior of the storage container.

In general an external air venting pump may be connected to the venting line via the air outlet. According to a preferred embodiment of the present invention, the apparatus further comprises an air venting pump arranged in the venting line.

Preferably, the apparatus further comprises an activated carbon filter arranged in the venting line.

In accordance with another aspect of the present invention, the apparatus further comprises a non-return valve arranged in the feeding line. The non-return valve prevents a reflux/backflow of liquid in the feeding line from the liquid outlet back to the tank/buffer reservoir.

According to yet another preferred embodiment of the present invention, the apparatus comprises a sensor for measuring tilt angles of the apparatus with respect to gravity, especially an inclinometer or a (3D-)acceleration sensor. The sensor is preferably realized as a MEMS sensor (MEMS: Micro-Electro-Mechanical system).

According to yet another preferred embodiment of the present invention, the apparatus further comprises an electronic evaluation unit for evaluation of an out-of-liquid state of the storage container. Thereby the electronic evaluation unit is in signal connection to the contact-free liquid level detector. In other words, a signal line is connecting the electronic evaluation unit to the contact-free liquid level detector.

In accordance with yet another aspect of the present invention, the electronic evaluation unit further on is in signal connection to the sensing device. By use of this signal connection the electronic evaluation unit is able to take the mounting state of the apparatus into account. Preferably, the electronic evaluation unit or another evaluation electronic of the apparatus is in signal connection to the sensor for measuring the tilt angles of the apparatus with respect to gravity. The evaluated data from the sensor can, e.g., be used for controlling a safety shut-off of the air venting pump.

According to a preferred embodiment of the present invention, the electronic evaluation unit is part of a control unit, in signal connection to a control unit or at least connectable to an external control unit.

According to another preferred embodiment of the present invention, the electronic evaluation unit is in signal connection to the air venting pump. By use of this signal connection the electronic evaluation unit (or the control unit respectively) is able to perform an automatic venting step.

According to yet another preferred embodiment of the present invention, the apparatus further comprises an output device arranged for providing a signal like an out-of-liquid alarm signal. In the simplest case the output device is a warning lamp (e.g. an LED-light) and/or an alarm bell.

According to another preferred embodiment of the present invention, the contact-free liquid level detector is arranged for a capacitive measurement of the liquid level or an inductive measurement of the liquid level.

The present invention further refers to a liquid intake system comprising: (a) a liquid intake device including a pump; and (b) an apparatus arranged for providing liquid from a storage container to said liquid intake device, which apparatus is designed as an aforementioned apparatus. A suction connection of the liquid intake device is connected to the liquid outlet of the apparatus arranged for providing liquid from the storage container.

According to a preferred embodiment of the present invention, the liquid intake device is a dosing device comprising a dosing pump.

### Detailed Description of the Invention

Additional details, features, characteristics and advantages of the object of the invention are disclosed in the figures and the following description of the respective figures, which - in exemplary fashion - show one embodiment and an example of a dispensing system according to the invention. In the drawings:
- Fig. 1: shows a schematic illustration of a tank module with a tank and an inductive conductivity sensor according to several preferred embodiments of the invention,
- Fig. 2: shows a sectional view of a specific design of the tank module described schematically in fig. 1, and
- Fig. 3: shows a schematic illustration of an apparatus for providing liquid from a storage container according to several preferred embodiments of the invention, which apparatus is mounted on said storage container.

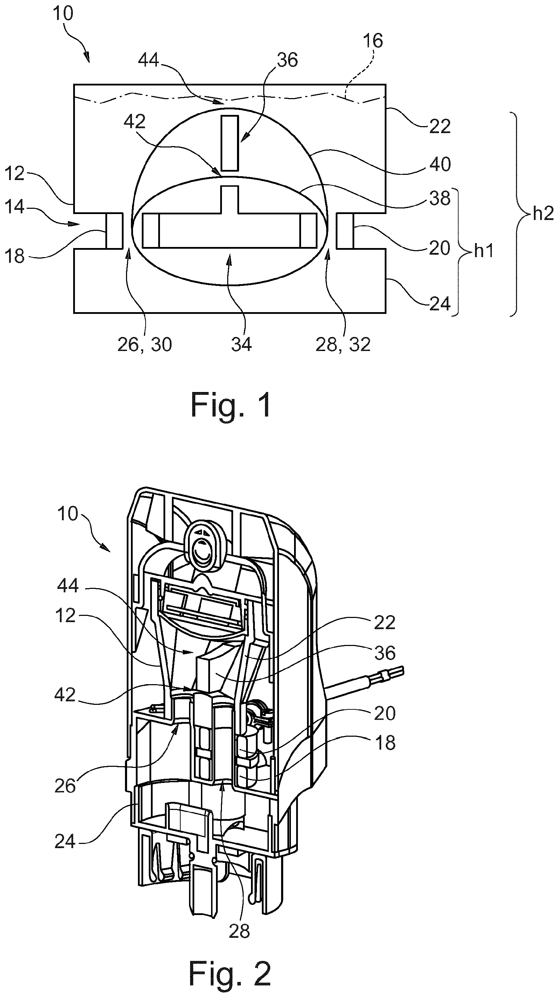

Fig. 1 shows a schematic representation of a tank module 10 with a tank 12 and an inductive conductivity sensor 14 arranged for determining a liquid level 16 of liquid in the tank 12. The inductive conductivity sensor14 comprises at least one transmitter unit 18 for generating an alternating electrical field which generates one or more annular currents in the liquid and at least one receiver unit 20 for receiving a receive signal generated via the annular current or at least one of the annular currents. The tank 12 comprises a first main part 22 serving as an upper part and a second main part 24 serving as a lower part of the tank 12, wherein the interior spaces of said main parts 22, 24 are connected by two passages 26, 28 separated from each other, wherein one of the passages 26 forms a first region 30 being the main transmitting region surrounded by a transmitter coil of the transmitter unit 18 and the other passage 28 forms a second region 32 being the main receiving region surrounded by a receiving coil of the receiver unit 20.

The two regions 30, 32 are partially separated by a dividing structure 34 of the tank 12, which dividing structure 34 comprises a divider plate 36 located in the first main part 22 of the tank 12.The interior of the tank 12 specifies by its shape different ring-like paths 38, 40 for enabling a plurality of annular currents (current loops), wherein for the formation of an annular current in the respective ring-like path 38, 40 an individual minimum liquid level is necessary. For the different ring-like paths 38, 40 the minimum liquid levels differ. For this purpose the tank 12 comprises channels 42, 44 through the dividing structure 34 for providing the ring-like paths having the different minimum liquid levels, wherein each channel is at a well-defined individual height h1, h2 defining a first and a second filling level. In the shown example the channels 42, 44 are realized as a break-through in the divider plate 36.

An annular current along the first ring-like path 38 ("C1-loop") is associated with a cell constant C1 (with C1 = I1 / A1, wherein I1 is the corresponding current and A1 the cross section of path 38). An annular current along the second ring-like path 40 ("C2-loop") is associated with a cell constant C2 (with C2 = I2 / A2, wherein I2 is the corresponding current and A2 the cross section of path 40).

The following function results:
When the first main part (upper part) 22 is not filled, no annular currents will be generated and no conductivity will be measured ("LL": low level-state of the tank 12). When the interior of the tank 12 is filled up to the first filling level h1: the cell constant C1 is active. When the interior of the tank 12 is filled up to a filling level 1 with h2 > l > h1 ("PLL": pre low level-state of the tank 12): because of the divider plate 36 only cell constant C1 is active. In case the divider plate 36 is over flooded, that means if the interior of the tank 12 is filled up to the second filling level h2: C1 and C2 are active ("HL": high level state of the tank 12).

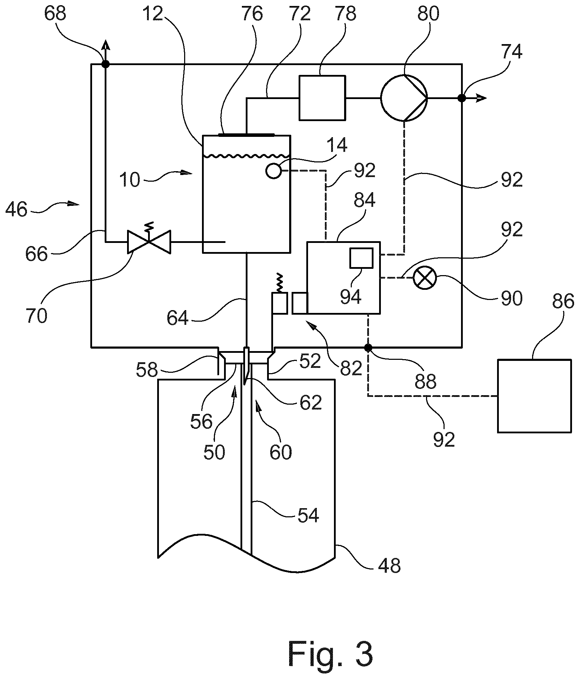

Fig. 2 shows a sectional view of a specific design of the tank module 10 described schematically in fig. 1. In this embodiment only one of the passages 26, 28, namely passage 28, is surrounded by both of these coils (the coil of the transmitter unit 18 and the coil of the receiver unit 20). The tank module 10 is designed for use as a buffer reservoir a contact-free liquid level detector for detecting the liquid level in said buffer reservoir in an apparatus 46 described hereafter in Fig. 3.

The illustration in Fig. 3 shows an apparatus 46 arranged for providing liquid from a storage container 48 to a liquid intake device like a dosing device. The storage container 48 is a canister, a safe package canister to be precise. The storage container 48 comprises a liquid outlet 50 formed by a nozzle 52 on the upper side of the container 48 and an integrated suction lance (suction pipe) 54 in the interior of the container 48. The suction lance 54 extends from the bottom area of the interior (not shown) up to the liquid outlet 50 of the container 48, which outlet 50 is closed by a membrane 56.

The apparatus 46 arranged for providing liquid from the storage container 48 comprises a support 58 for mounting the apparatus 46 on the liquid outlet 50 of said storage container 48 so that an extraction probe 60 extends with a hollow needle 62 through said liquid outlet 50 of the storage container 48 and the membrane 56 closing this outlet 50 into the interior of said storage container 48, or more precisely in the upper opening of the suction lance 54. The extraction probe 60 is arranged for extracting liquid out of the storage container 48. Further on, the apparatus 46 comprises the tank module 10 with the tank 12 forming a buffer reservoir connected to the extraction probe 60 via a suction pipe 64 and the sensor 14 forming a contact-free liquid level detector for detecting the liquid level in the buffer reservoir.

The apparatus 46 further comprises a feeding line 66 connecting the buffer reservoir (tank 12) to a liquid outlet 68 of the apparatus 46. A non-return valve 70 is arranged in the feeding line 66 and the liquid outlet 68 is adapted for establishing a connection to (the suction line of) a liquid intake device like a dosing device (not shown). Further on, the apparatus 46 comprises a venting line 72 connecting the buffer reservoir (tank 12) to an air outlet 74 of the apparatus 46, wherein the connection of the buffer reservoir (tank 12) to the venting line 72 comprises a waterproof breathable membrane 76 for preventing a leakage of liquid via the venting line 72 and the air outlet 74. Further on an activated carbon filter 78 and an air venting pump (purge pump) 80 are arranged in the venting line 72 too.

The apparatus 46 further comprises a sensing device 82 for determining whether the apparatus 46 is mounted on the storage container 12 via the support 58. The sensing device 82 is formed as a button type sensing device with a "connected finger" coupled to a magnet, a spring and a magnetic field sensor (e.g. a hall element) for detecting the position of the magnet. Further on, the apparatus 46 includes an electronic evaluation unit 84 for evaluation of an out-of-liquid state of the storage container 48 (and optional other states either), wherein the electronic evaluation unit 84 is in signal connection to the contact-free liquid level sensor 14, to (the magnetic field sensor of) the sensing device 82, the venting pump 80, an external control unit 86 via a signal connection 88, and an output device 90 of the apparatus 46 being an OP mode LED via signal lines 92. Said external control unit 86 is, e.g., the control unit of a higher level system including the apparatus 46 and the above mentioned (but not shown) liquid intake device comprising a pump fluidically connected to the feeding line 66 via the liquid outlet 68. The external control unit 86 controls -among others- the pump of the liquid intake device.

One main application for this kind of apparatus 46 is providing (liquid) chemical products from a storage container 48 to a corresponding liquid intake device. Some of these chemical products are very aggressive. As a result the demand for the aforementioned safe packages is increasing. Such safe packages typically do not have an opening where a state of the art suction lance could be placed. The safety packages instead have a coupling system on top of the storing container (product canister) 48. Low level detection is critical with regard to a change of the storage container. The apparatus 46 enables a contactless out of product detection. The full automatic venting technology ensures that the product lines will be refilled after a replacement of the empty storage container 48. This venting will start automatically after a reconnection to a new container/canister.

It should be noted that, as used in this specification and the appended claims, the singular forms "a", "an" and "the" include plural referents unless the content clearly dictates otherwise. Thus, for example, reference to a composition containing "a compound" includes a mixture of two or more compounds. It should also be noted that the term "or" is generally employed in its sense including "and/or" unless the content clearly dictates otherwise.

## Claims

1. A tank module (10) comprising a tank (12) and an inductive conductivity sensor (14) arranged for determining a liquid level (16) of liquid in the tank (12), wherein the inductive conductivity sensor (14) comprises at least one transmitter unit (18) for generating an alternating field which generates one or more annular currents in the liquid and at least one receiver unit (20) for receiving a receive signal generated via the annular current or at least one of the annular currents, wherein the interior of the tank (12) specifies by its shape different ring- like paths (38, 40) for enabling a plurality of annular currents, wherein for the formation of an annular current in the respective ring-like path (38, 40) an individual minimum liquid level is necessary, wherein the minimum liquid levels differ for the different ring-like paths (38, 40), **characterized in that** the interior of the tank comprises a first region (30) being the main transmitting region of the transmitter unit (18) and a second region (32) being the main receiving region of the receiver unit (20), wherein both regions are located on each of the different ring-like paths (38, 40) and are separated by a dividing structure (34) of the tank.

2. The tank module according to claim 1, wherein the tank comprises one or more channels (42, 44) through the dividing structure (34) for providing the ring-like paths (38, 40) , wherein each channel (42, 44) is at a well-defined individual height (h1 , h2).

3. The tank module according to claim 1 or 2, wherein at least one part of the dividing structure (34) is formed as a divider plate (36).

4. The tank module according to claim 3, wherein at least one of the channels (42, 44) is realized as a break-through in the divider plate (36).

5. The tank module according to one of claims 1 to 4, wherein the tank (12) comprises a first main part (22) serving as an upper part and a second main part (24) serving as a lower part of the tank (12), wherein the interior spaces of said main parts (22, 24) are connected by two passages (26, 28) separated from each other, wherein at least one of the passages (26, 28) comprises the first and second regions (30, 32).

6. The tank module according to claim 5, wherein one of the passages (26) forms the first region (30) and the other passage (28) forms the second region (32).

7. The tank module according to claim 5 or 6, wherein the divider plate (36) is located in the first main part (22) of the tank (12).

8. The tank module according to one of claims 1 to 7, wherein the transmitter unit (18) comprises a transmitter circuit and a transmitter coil and the receiver unit (20) comprises a receiver circuit and a receiver coil.

9. The tank module according to claim 8, wherein the one passage (26) is surrounded by the transmitter coil and the other passage (28) is surrounded by the receiver coil or one of these passages (26, 28) is surrounded by the transmitter coil and the receiver coil.

10. An apparatus (46) arranged for providing liquid from a storage container (48) to a liquid intake device, especially a dosing device, the apparatus (46) comprising:
an extraction probe (60) for extracting liquid out of the storage container (48);
a tank module (10) comprising a tank (12) and a detector for detecting a liquid level of a liquid in the tank (10), wherein the tank (12) acts as a buffer reservoir which is connected to the extraction probe (60);
- a feeding line (66) connecting the tank (12) to a liquid outlet (68) of the apparatus (46), which liquid outlet (68) is adapted for establishing a connection to the liquid intake device;
- a venting line (72) connecting the tank (12) with an air outlet (74) of the apparatus (46); and
- a support (58) for mounting the apparatus (46) on the storage container (48) in such way, that the extraction probe (60) extends through a liquid outlet (50) of the storage container (48) into the interior of said storage container (48),
- wherein the tank module (10) is a tank module (10) according to one of the claims 1 to 9, wherein the inductive conductivity sensor (14) of said tank module (10) acts as the detector for detecting the liquid level of a liquid in the tank (12).

## Patentansprüche

1. Tankmodul (10), umfassend einen Tank (12) und einen induktiven Leitfähigkeitssensor (14), der zum Bestimmen eines Flüssigkeitspegels (16) einer Flüssigkeit in dem Tank (12) angeordnet ist, wobei der induktive Leitfähigkeitssensor (14) mindestens eine Sendereinheit (18) zum Erzeugen eines Wechselfelds, das eine oder mehrere Ringströmungen in der Flüssigkeit erzeugt, und mindestens eine Empfängereinheit (20) zum Empfangen eines Empfangssignals umfasst, das über die Ringströmung oder mindestens eine der Ringströmungen erzeugt wird, wobei das Innere des Tanks (12) durch seine Form unterschiedliche ringähnliche Pfade (38, 40) zum Ermöglichen einer Vielzahl von Ringströmungen angibt, wobei für die Ausbildung einer Ringströmung in dem jeweiligen ringähnlichen Pfad (38, 40) ein individueller Mindestflüssigkeitspegel erforderlich ist, wobei die Mindestflüssigkeitspegel für die unterschiedlichen ringähnlichen Pfade (38, 40) unterschiedlich sind,
**dadurch gekennzeichnet, dass** das Innere des Tanks einen ersten Bereich (30), der der Hauptsendebereich der Sendereinheit (18) ist, und einen zweiten Bereich (32) umfasst, der der Hauptempfangsbereich der Empfängereinheit (20) ist, wobei beide Bereiche sich jeweils auf den unterschiedlichen ringähnlichen Pfaden (38, 40) befinden und durch eine Trennstruktur (34) des Tanks separiert sind.

2. Tankmodul nach Anspruch 1, wobei der Tank einen oder mehrere Kanäle (42, 44) durch die Trennstruktur (34) zum Bereitstellen der ringähnlichen Pfade (38, 40) umfasst, wobei jeder Kanal (42, 44) auf einer genau definierten individuellen Höhe (h1, h2) liegt.

3. Tankmodul nach Anspruch 1 oder 2, wobei mindestens ein Teil der Trennstruktur (34) als eine Trennplatte (36) ausgebildet ist.

4. Tankmodul nach Anspruch 3, wobei mindestens einer der Kanäle (42, 44) als ein Durchbruch in der Trennplatte (36) ausgebildet ist.

5. Tankmodul nach einem der Ansprüche 1 bis 4, wobei der Tank (12) einen ersten Hauptteil (22), der als ein Oberteil dient, und einen zweiten Hauptteil (24) umfasst, der als ein Unterteil des Tanks (12) dient, wobei die Innenräume der Hauptteile (22, 24) durch zwei voneinander separierte Durchgänge (26, 28) verbunden sind, wobei mindestens einer der Durchgänge (26, 28) den ersten und den zweiten Bereich (30, 32) umfasst.

6. Tankmodul nach Anspruch 5, wobei einer der Durchgänge (26) den ersten Bereich (30) und der andere Durchgang (28) den zweiten Bereich (32) ausbildet.

7. Tankmodul nach Anspruch 5 oder 6, wobei sich die Trennplatte (36) in dem ersten Hauptteil (22) des Tanks (12) befindet.

8. Tankmodul nach einem der Ansprüche 1 bis 7, wobei die Sendereinheit (18) eine Senderschaltung und eine Senderspule umfasst und die Empfängereinheit (20) eine Empfängerschaltung und eine Empfängerspule umfasst.

9. Tankmodul nach Anspruch 8, wobei der eine Durchgang (26) von der Senderspule umgeben ist und der andere Durchgang (28) von der Empfangsspule umgeben ist oder einer dieser Durchgänge (26, 28) von der Senderspule und der Empfangsspule umgeben ist.

10. Einrichtung (46), die zum Bereitstellen von Flüssigkeit aus einem Vorratsbehälter (48) an eine Flüssigkeitsaufnahmevorrichtung angeordnet ist, insbesondere einer Dosiervorrichtung, die Einrichtung (46) umfassend:
eine Extraktionssonde (60) zum Extrahieren von Flüssigkeit aus dem Vorratsbehälter (48);
ein Tankmodul (10), umfassend einen Tank (12) und einen Detektor zum Erfassen eines Flüssigkeitspegels einer Flüssigkeit in dem Tank (10), wobei der Tank (12) als ein Pufferreservoir fungiert, das mit der Extraktionssonde (60) verbunden ist;
- eine Zuführleitung (66), die den Tank (12) mit einem Flüssigkeitsauslass (68) der Einrichtung (46) verbindet, wobei der Flüssigkeitsauslass (68) zum Herstellen einer Verbindung mit der Flüssigkeitsaufnahmevorrichtung angepasst ist;
- eine Entlüftungsleitung (72), die den Tank (12) mit einem Luftauslass (74) der Einrichtung (46) verbindet; und
- eine Stütze (58) zum Anbringen der Einrichtung (46) auf dem Vorratsbehälter (48) derart, dass sich die Extraktionssonde (60) durch einen Flüssigkeitsauslass (50) des Vorratsbehälters (48) in das Innere des Vorratsbehälters (48) erstreckt,
- wobei das Tankmodul (10) ein Tankmodul (10) nach einem der Ansprüche 1 bis 9 ist, wobei der induktive Leitfähigkeitssensor (14) des Tankmoduls (10) als Detektor zum Erfassen des Flüssigkeitspegels einer Flüssigkeit in dem Tank (12) fungiert.

## Revendications

1. Module de réservoir (10) comprenant un réservoir (12) et un capteur de conductivité à induction (14) agencé pour déterminer un niveau de liquide (16) d'un liquide dans le réservoir (12), dans lequel le capteur de conductivité à induction (14) comprend au moins une unité de transmission (18) permettant de générer un champ alternatif qui génère un ou plusieurs courants annulaires dans le liquide et au moins une unité de réception (20) permettant de recevoir un signal de réception généré par l'intermédiaire du courant annulaire ou d'au moins l'un des courants annulaires, dans lequel l'intérieur du réservoir (12) spécifie par sa forme différents trajets de type anneau (38, 40) permettant d'activer une pluralité de courants annulaires, dans lequel pour la formation d'un courant annulaire dans le trajet de type anneau (38, 40) respectif un niveau minimal individuel de liquide est nécessaire, dans lequel les niveaux minimaux de liquide diffèrent pour les différents trajets de type anneau (38, 40), **caractérisé en ce que** l'intérieur du réservoir comprend une première région (30) étant la région de transmission principale de l'unité de transmission (18) et une seconde région (32) étant la région de réception principale de l'unité de réception (20), dans lequel l'une et l'autre des régions sont localisées sur chacun des différents trajets de type anneau (38, 40) et sont séparées par une structure de division (34) du réservoir.

2. Module de réservoir selon la revendication 1, dans lequel le réservoir comprend un ou plusieurs canaux (42, 44) à travers la structure de division (34) permettant de fournir les trajets de type anneau (38, 40), dans lequel chaque canal (42, 44) est à une hauteur individuelle (h1, h2) bien définie.

3. Module de réservoir selon la revendication 1 ou 2, dans lequel au moins une partie de la structure de division (34) est formée en tant que plaque de division (36).

4. Module de réservoir selon la revendication 3, dans lequel au moins l'un des canaux (42, 44) est réalisé en tant que percée dans la plaque de division (36).

5. Module de réservoir selon l'une des revendications 1 à 4, dans lequel le réservoir (12) comprend une première partie principale (22) servant de partie supérieure et une seconde partie principale (24) servant de partie inférieure du réservoir (12), dans lequel les espaces intérieurs desdites parties principales (22, 24) sont raccordés par deux passages (26, 28) séparés l'un de l'autre, dans lequel au moins l'un des passages (26, 28) comprend les première et seconde régions (30, 32).

6. Module de réservoir selon la revendication 5, dans lequel l'un des passages (26) forme la première région (30) et l'autre passage (28) forme la seconde région (32).

7. Module de réservoir selon la revendication 5 ou 6, dans lequel la plaque de division (36) est localisée dans la première partie principale (22) du réservoir (12).

8. Module de réservoir selon l'une des revendications 1 à 7, dans lequel l'unité de transmission (18) comprend un circuit de transmission et une bobine de transmission, et l'unité de réception (20) comprend un circuit de réception et une bobine de réception.

9. Module de réservoir selon la revendication 8, dans lequel le passage (26) précité est entouré par la bobine de transmission et l'autre passage (28) est entouré par la bobine de réception, ou l'un de ces passages (26, 28) est entouré par la bobine de transmission et la bobine de réception.

10. Appareil (46) agencé pour la fourniture d'un liquide d'un récipient de stockage (48) à un dispositif d'admission de liquide, spécialement un dispositif de dosage, l'appareil (46) comprenant :
une sonde d'extraction (60) permettant d'extraire un liquide hors du récipient de stockage (48) ;
un module de réservoir (10) comprenant un réservoir (12) et un détecteur permettant de détecter un niveau de liquide d'un liquide dans le réservoir (10), dans lequel le réservoir (12) joue le rôle de réservoir tampon qui est raccordé à la sonde d'extraction (60) ;
- une ligne d'alimentation (66) raccordant le réservoir (12) à une sortie de liquide (68) de l'appareil (46), sortie de liquide (68) qui est conçue pour établir un raccordement vers le dispositif d'admission de liquide ;
- une ligne de mise à l'air (72) raccordant le réservoir (12) à une sortie d'air (74) de l'appareil (46) ; et
- un support (58) permettant de monter l'appareil (46) sur le récipient de stockage (48) d'une manière telle que la sonde d'extraction (60) s'étend à travers une sortie de liquide (50) du récipient de stockage (48) vers l'intérieur dudit récipient de stockage (48),
- dans lequel le module de réservoir (10) est un module de réservoir (10) selon l'une des revendications 1 à 9, dans lequel le capteur de conductivité à induction (14) dudit module de réservoir (10) joue le rôle de détecteur permettant de détecter le niveau de liquide d'un liquide dans le réservoir (12).
